(19) Europäisches Patentamt
European Patent Office
Office européen des brevets

(11) EP 2 377 755 A2

(12) **EUROPEAN PATENT APPLICATION**

(43) Date of publication:
**19.10.2011 Bulletin 2011/42**

(51) Int Cl.:
***B63B 25/28*** *(2006.01)* ***B63B 9/04*** *(2006.01)*
***B63B 43/04*** *(2006.01)*

(21) Application number: **10190688.1**

(22) Date of filing: **10.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.04.2010 TW 099111406**

(71) Applicant: **CSBC Corporation, Taiwan**
**Kaohsiung 812 (TW)**

(72) Inventors:
- **Lee, Chih-Yi**
**812, Kaohsiung (TW)**
- **Tsai, Kun-Tsung**
**812, Kaohsiung (TW)**
- **Chou, Chih-Ming**
**812, Kaohsiung (TW)**
- **Chen, Chung-Shiy**
**812, Kaohsiung (TW)**
- **Yang, Wen-Hung**
**812, Kaohsiung (TW)**

(74) Representative: **Zimmermann, Tankred Klaus**
**Schoppe, Zimmermann, Stöckeler & Zinkler**
**Patentanwälte**
**Postfach 246**
**82043 Pullach bei München (DE)**

(54) **Container vessel**

(57) A container vessel includes a hull (2) defining a container-retaining space (22) therein and having a top area (21), and a pair of carrier structures (31). The carrier structures (31) are disposed respectively on two lateral surfaces (24) of the hull (2). Each of the carrier structures (31) passes through a waterline of the hull (2) and has a top surface (315). The top surfaces (315) of the carrier structures (31) and the top area (21) of the hull (2) cooperate with each other to form a supplementary container-storing region (4).

31
31
2

FIG. 2

EP 2 377 755 A2

Printed by Jouve, 75001 PARIS (FR)

## Description

The present invention relates to a freighter, more particularly to a container vessel.

The width and length of a canal lock limit the dimensions of vessels that travel therethrough. A container vessel that can travel through the Panama Canal is called as a Panamax container vessel, and container vessels that have sizes larger than the Panamax size are called as Post-Panamax container vessels or over-Panamax container vessels.

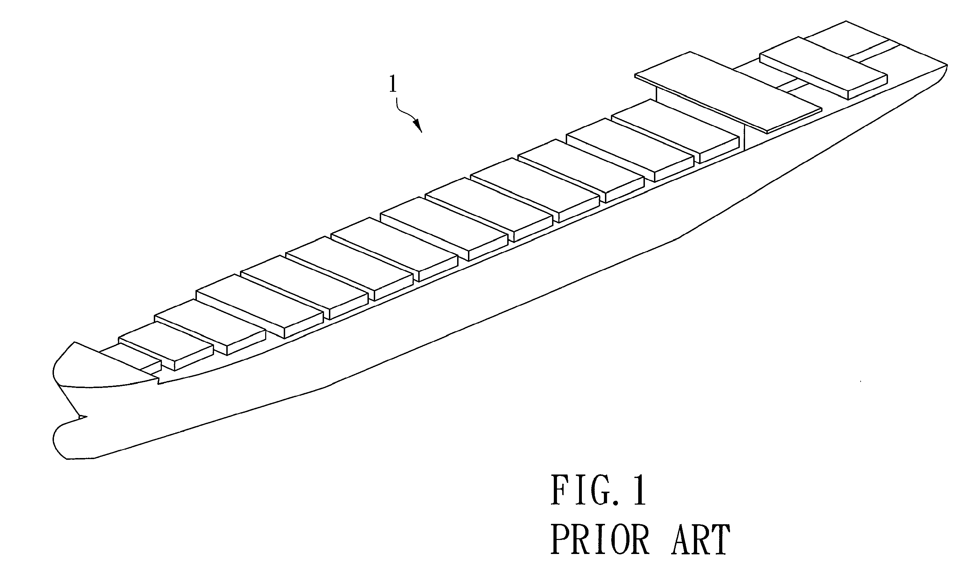

Referring to FIG. 1, in order to maximize cargo-carrying capacity under the Panamax requirement, a Panamax container vessel 1 has to be built with a relatively high ratio of its length over its width. However, such configuration of the Panamax container vessel 1 results in a relatively low transverse stability.

Due to the rising prices of fuel oil, cost of shipping trade has increased as well. In order to lower unit cost and improve fuel efficiency, the tonnage of the container vessels and the cargo-carrying capacity tend to be increased progressively.

Moreover, after the enforcement of the Energy Efficiency Operational Indicator (EEOI) that is established by the International Maritime Organization (IMO) for limiting carbon dioxide emission quantity, it is necessary to reduce ship speed and increase cargo-carrying capacity of present Panamax container vessels to meet or even go under the baseline of EEOI requirement.

In view of the demand for greater cargo-carrying capacity of the container vessels, the expansion of the Panama Canal is to be terminated in 2014 so as to allow many of the currently existing post Panamax container vessels to travel through the Panama Canal. Therefore, the existing Panamax sized vessels will be less competitive than the Post-Panamax sized ships. However, for the owners of the Panamax Container vessels, costs of new buildings with greater size are relatively high.

Therefore, the object of the present invention is to provide a container vessel that is constructed based on the conventional Panamax container vessel, and that is capable of ensuring transverse stability and carrying more containers than the conventional Panamax container vessel.

Accordingly, the container vessel of the present invention comprises a hull defining a container-retaining space therein and having a top area, and a pair of carrier structures. The carrier structures are disposed respectively on two lateral surfaces of the hull. Each of the carrier structures passes through a waterline of the hull and has a top surface. The top surfaces of the carrier structures and the top area of the hull cooperate with each other to form a supplementary container-storing region.

Other features and advantages of the present invention will become apparent in the following detailed description of the preferred embodiments with reference to the accompanying drawings, of which:

FIG. 1 is a perspective view of a conventional container vessel;

FIG. 2 is a perspective view of a first preferred embodiment of a container vessel according to the present invention;

FIG. 3 is a schematic sectional view of the first preferred embodiment;

FIG. 4 is a schematic sectional view of a second preferred embodiment of the container vessel according to the present invention;

FIG. 5 is a schematic sectional view of a third preferred embodiment of the container vessel according to the present invention; and

FIG. 6 is a schematic sectional view of a fourth preferred embodiment of the container vessel according to the present invention.

Before the present invention is described in greater detail, it should be noted that like reference numerals are used to indicate corresponding or analogous elements throughout the accompanying disclosure.

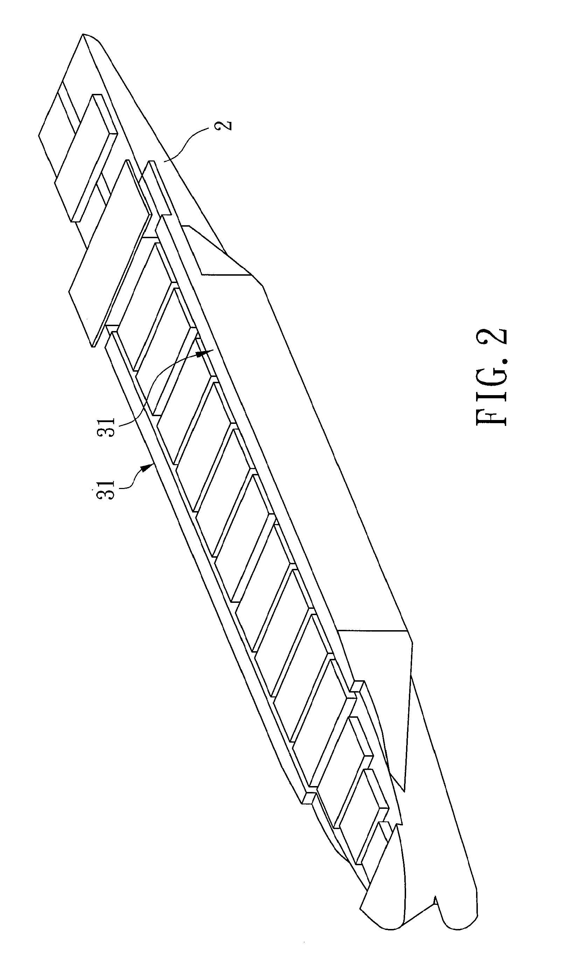

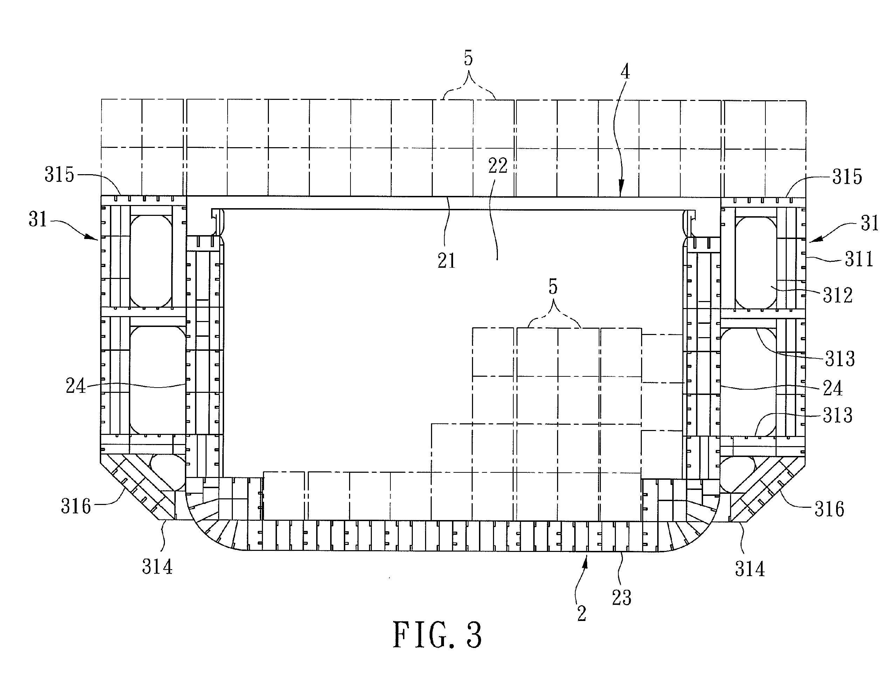

Referring to FIGS. 2 and 3, a container vessel according to a first preferred embodiment of the present invention includes a Panamax-sized hull 2 and a pair of carrier structures 31.

The hull 2 defines a container-retaining space 22 therein and has a top area 21, and two lateral surfaces 24. The container-retaining space 22 is adapted for storing a plurality of containers 5. The carrier structures 31 are disposed respectively on the lateral surfaces 24 of the hull 2. Each of the carrier structures 31 passes through a waterline (not shown) of the hull 2 and has a top surface 315. The top surfaces 315 of the carrier structures 31 and the top area 21 of the hull 2 cooperate with each other to form a supplementary container-storing region 4 for storing more containers 5.

In this embodiment, each of the carrier structures 31 includes a carrier hull 311 that includes a bottom wall 314 and a lateral wall 316, and that cooperates with the hull 2 to define a compartment 312 therebetween. The carrier structures 31 increase buoyancy and improve transverse stability of the container vessel, and also provide extra container-storing space. In this embodiment, each carrier structure 31 further includes a plurality of supports 313 that divides a corresponding compartment 312 into a plurality of compartments, and that improve the structural strength of a respective carrier hull 311.

In this embodiment, the bottom wall 314 of each of the carrier structures 31 extends horizontally from a respective one of the lateral surfaces 24 of the hull 2. The lateral wall 316 of each of the carrier structures 31 has a lower wall portion that extends obliquely and upwardly from a distal edge of the bottom wall 314 of a corresponding carrier structure 31, and that forms an obtuse angle with the bottom wall 314 of the corresponding carrier structure 31 (see FIG. 3), and an upper wall portion that extends form the lower wall portion and that is formed with the top surface 315 of a corresponding one of the carrier structures 31.

The parameters that affect transverse stability of a ship are described in the following. Since the parameters are well-known to people skilled in the art, they are presented in the following without referring to any one of the figures. The center of gravity (G) of a ship is located at a center of weight of the ship, and the center of buoyancy (B) is located at a center of volume of the water which the ship displaces. When the ship heels, the center of buoyancy (B) is moved to another position (B'). The intersection of a vertical line through the center of buoyancy (B') of the heeled ship and a line connecting the center of gravity (G) and the original center of buoyancy (B) is defined as a metacenter (M). The ship swings along an axis that extends in a longitudinal direction through the metacenter (M). A positive correlation can be found between the stability of the ship and a distance (KM) between a keel (K) and the metacenter (M) of the ship. When the distance (KM) is smaller than a distance (KG) between the keel (K) and the center of gravity (G), the ship may overturn. Moreover, the distance (KM) is equal to a distance (KB) between the keel (K) and the center of buoyancy (B) plus a distance (BM) between the center of buoyancy (B) and the metacenter (M). The distance (BM) may be calculated according to the following formula:

$$BM = I/\nabla$$

where $\nabla$ represents the volume of the water which the ship displaces, and I represents moment of inertia. For example, here we have a ship having a hollow rectangular parallelepiped profile. The moment inertia of the ship may be defined according to the following formula:

$$I = \left(\frac{1}{12}\right) a * b^3$$

where *a* represents the overall length of the ship, and *b* represents the maximum cross-sectional width of the ship.

According to abovementioned formulas, the moment of inertia I is in direct correlation to the distance (KM) and the transverse stability of the ship, i.e., the larger the moment of inertia I, the better the transverse stability of the ship. Moreover, the increase of the length *a* and width *b* (particularly the width *b*) of the ship results in improvement of the moment of inertia I.

Each of the containers 5 has a cross-sectional width that is 7.5% of that of the hull 2. In actual use, when the cross-sectional width of each of the carrier structures 31 is larger than the total width of three containers 5 (i.e., approximately 25% of that of the hull 2), it is necessary to enhance the structure of the hull 2, e.g., increasing lateral timbers to ensure the structural strength of the container vessel. Therefore, the cross-sectional width of each of the carrier structures 31 is preferably designed to range from 7.5 to 25% of that of the hull 2 for supporting containers 5.

Each of the containers 5 has a length that is 2% of the length between perpendiculars (LBP) of the hull 2. Therefore, each of the carrier structures 31 has a longitudinal length ranging from 2% to 100% of the LBP of the hull 2. Preferably, each of the carrier structures 31 has a longitudinal length that ranges from 40% to 85% of the LBP of the hull 2. It should be noted that the LBP of a ship refers to the length between lines that are perpendicular to a waterline thereof and that extend respectively through a forward surface of a stem thereof and an after surface of a sternpost thereof. Since the feature of this invention does not reside in the stem and the sternpost, further details of the same are omitted herein for the sake of brevity.

When loading the containers 5, some of the containers 5 are first stored in the container-retaining space 22 until the hull 2 is loaded with an appropriate draft, and the remaining containers 5 are then stacked on the supplementary container-storing region 4.

A comparison of the dimensions of the conventional Panamax-sized hull 2 before and after the addition of the carrier structures 31 is shown below in Table 1.

Table 1

| Ship Type | Maximum cross-sectional width (Meter) | Capacity (TEU) | Speed (Knot) |
|---|---|---|---|
| Panamax-sized hull | 32.2 | 3024 | 24.25 |
| Panamax-sized hull combined with carrier structures of the invention | 42.4 | 4581 | 20.00 |

In Table 1, the unit of capacity is TEU, which is the abbreviation of "twenty-foot equivalent unit".

It is clearly shown in Table 1 that, when the hull 2 is mounted with the carrier structures 31, the cargo-carrying capacity is increased from 3024 TEU to 4581 TEU, i.e., 50% increase.

To sum up, the advantages of the container vessel according to the present invention are as follows.

(1) Transverse stability

The presence of the carrier structures 31 increases the cross-sectional width of the container vessel, and the carrier structures 31 increase buoyancy of the container vessel and thereby increase transverse stability.

(2) Increase of cargo-carrying capacity

The supplementary container-storing region 4 provides an extra cargo-carrying capacity. Further, since the cross-sectional width of the container vessel is increased, the containers 5 can be stacked more than they are on the top area 21 of the conventional Panamax container vessel.

(3) Environmentally friendly

By virtue of the increased carrying capacity and the decreased ship speed, the fuel efficiency per container is improved relative to the conventional Panamax container vessel.

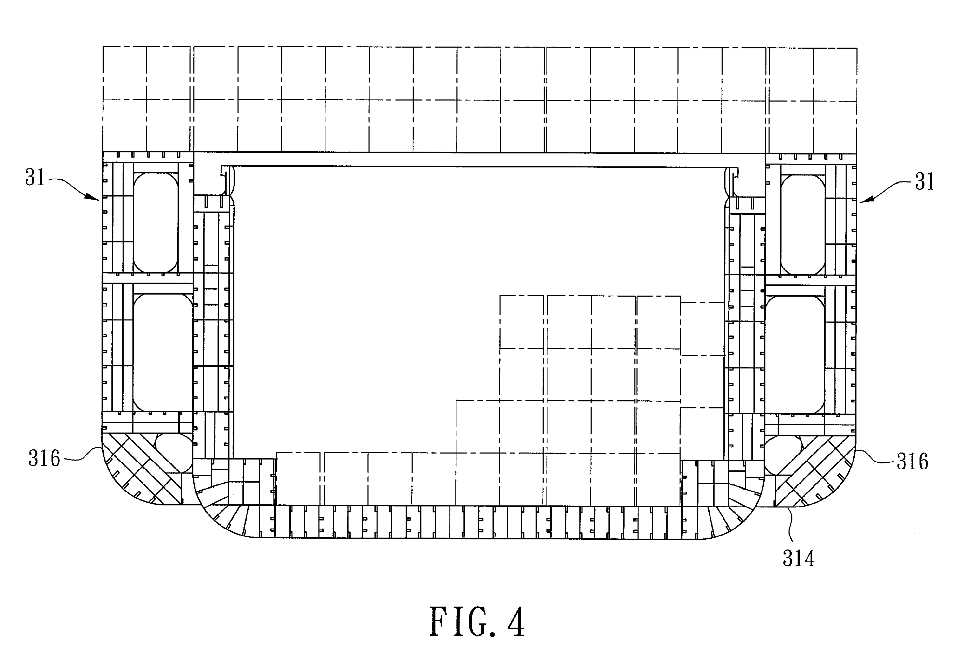

Referring to FIG. 4, a second preferred embodiment of the container vessel according to the present invention has a structure similar to that of the first embodiment. The main difference between this embodiment and the first embodiment resides in that the lower wall portion of the lateral wall 316 of each of the carrier structures 31 is curve-shaped, so as to further reduce resistance during navigation. The second preferred embodiment has the same advantages as those of the first preferred embodiment.

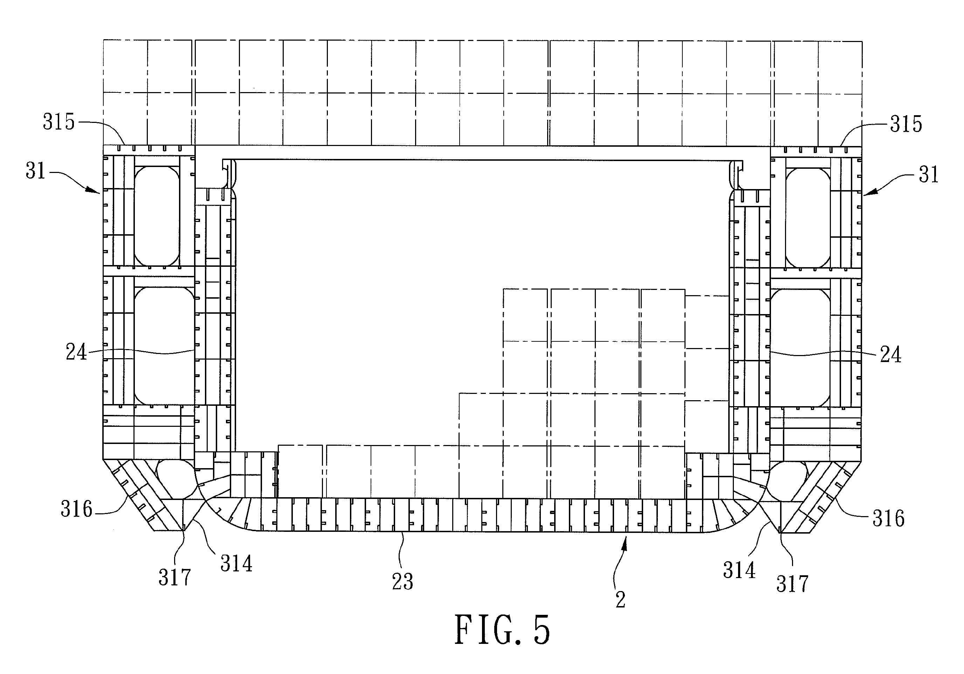

Referring to FIG. 5, a third preferred embodiment of the container vessel according to the present invention has a structure similar to that of the first embodiment. The main difference between this embodiment and the first embodiment resides in the following. In this embodiment, the bottom wall 314 of each of the carrier structures 31 extends obliquely and downwardly from a respective one of the lateral surfaces 24 of the hull 2 and has a distal edge 317 that is aligned horizontally with a bottom end 23 of the hull 2. The lateral wall 316 of each of the carrier structures 31 has a lower wall portion that is connected to the distal edge 317 of the bottom wall 314 of a corresponding one of the carrier structures 31, and an upper wall portion that extends from the lower wall portion and that is formed with the top surface 315 of the corresponding one of the carrier structures 31. The third preferred embodiment has the same advantages as those of the first preferred embodiment.

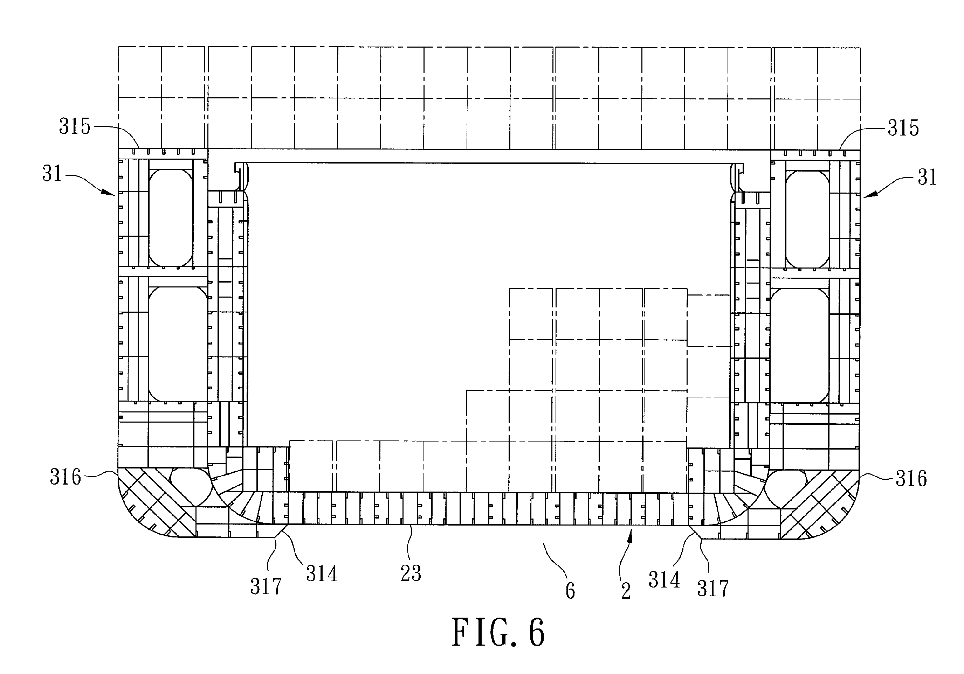

Referring to FIG. 6, a fourth preferred embodiment of the container vessel according to the present invention has a structure similar to that of the first embodiment. The main difference between this embodiment and the first embodiment resides in the following. In this embodiment, the bottom wall 314 of each of the carrier structures 31 extends obliquely and downwardly from a bottom end 23 of the hull 2 and has a distal edge 317. The lateral wall 316 of each of the carrier structures 31 has a lower wall portion that is connected to the distal edge 317 of the bottom wall 314 of a corresponding one of the carrier structures 31, and an upper wall portion that extends from the lower wall portion and that is formed with the top surface 315 of the corresponding one of the carrier structures 31. The bottom walls 314 of the carrier structures 31 cooperate with the bottom end 23 of the hull 2 to define a conduct 6 for conducting water to flow therethrough so as to further enhance transverse stability of the container vessel during operation. The fourth preferred embodiment has the same advantages as those of the first preferred embodiment.

## Claims

**1.** A container vessel **characterized by**:

a hull (2) defining a container-retaining space (22) therein and having a top area (21); and
a pair of carrier structures (31) that are disposed respectively on two lateral surfaces (24) of said hull (2), eachofsaidcarrierstructures (31) passingthrough a waterline of said hull (2) and having a top surface (315), said top surfaces (315) of said carrier structures (31) and said top area (21) of said hull (2) cooperating with each other to form a supplementary container-storing region (4).

**2.** The container vessel of Claim 1, **characterized in that** each of said carrier structures (31) has a maximum cross-sectional width ranging from 15% to 50% of that of said hull (2).

**3.** The container vessel of any one of Claims 1 and 2, **characterized in that** each of said carrier structures (31) has a longitudinal length ranging from 2% to 100% of a length between perpendiculars of said hull (2).

**4.** The container vessel of Claim 3, further **characterized in that** the longitudinal length of each of said carrier structures (31) ranges from 40% to 85% of the length between the perpendiculars of said hull (2).

**5.** The container vessel of any one of Claims 1 to 4, further **characterized in that** each of said carrier structures (31) includes:

a bottom wall (314) extending horizontally from a respective one of said lateral surfaces (24) of said hull (2); and
a lateral wall (316) having a lower wall portion that is connected to said bottom wall (314), and an upper wall portion that extends from said lower wall portion and that is formed with said top surface (315) of a corresponding one of said carrier structures (31).

**6.** The container vessel of any one of Claims 1 to 4, further **characterized in that** each of said carrier structures (31) includes:

a bottom wall (314) extending obliquely and downwardly from a respective one of said lateral surfaces (24) of said hull (2), and having a distal edge (317) that is aligned horizontally with a bottom end (23) of said hull (2); and
a lateral wall (316) having a lower wall portion that is connected to said distal edge (317) of said bottom wall (314), and an upper wall portion that extends from said lower wall portion and that is formed with said top surface (315) of a corresponding one of said carrier structures (31).

**7.** The container vessel of any one of Claims 1 to 4, further **characterized in that** each of said carrier structures (31) includes:

a bottom wall (314) extending obliquely and downwardly from a bottom end (23) of said hull (2) and having a distal edge (317); and
a lateral wall (316) having a lower wall portion that is connected to said distal edge (317) of said bottom wall (314), and an upper wall portion that extends from said lower wall portion and that is formed with said top surface (315) of a corresponding one of said carrier structures (31).

**8.** The container vessel of any one of Claims 1 to 7, further **characterized in that** each of said carrier structures (31) includes a carrier hull (311) that cooperates with said hull (2) to define a compartment (312) therebetween.

1

FIG. 1
PRIOR ART

2
31
31

FIG. 2

315
31
311
312
313
24
313
316
314
4
23
2
5
22
21
5
314
315
31
24
316

FIG. 3

31
316
314
316
31

FIG. 4

315
31
24
316
317
314
2
23
314
317
316
24
315
31
FIG. 5

31
315
316
317
314
2
6
23
314
317
315
31
316
FIG. 6